# EUROPEAN PATENT SPECIFICATION

(11) **EP 3 332 939 B1**
(45) Date of publication and mention of the grant of the patent: **07.08.2019**
(21) Application number: 16202893.0
(22) Date of filing: 08.12.2016
(51) Int. Cl.: B29C 45/02, B29C 45/53

(54) **A DIRECT INJECTION MOLDING APPARATUS AND A METHOD OF INJECTION MOLDING**
VORRICHTUNG ZUM DIREKTEN SPRITZGIESSEN UND VERFAHREN ZUM SPRITZGIESSEN
APPAREIL DE MOULAGE PAR INJECTION DIRECTE ET PROCÉDÉ DE MOULAGE PAR INJECTION

(43) Date of publication of application: 13.06.2018
(73) Proprietor: FTDK Holding ApS, 2680 Solrød Strand (DK)
(72) Inventor: JØRGENSEN, Henrik, 2680 Solrød Strand (DK)
(74) Representative: Patentgruppen A/S

(56) References cited:
- EP-A1- 0 960 672
- JP-A- S61 114 830
- US-A- 3 319 297
- US-A1- 2007 029 704

## Description

### Field of the invention

The invention relates to an apparatus for injection molding, which apparatus comprises a mold cavity member having a mold cavity, a melt channel, an injection chamber and an injection gate having an injection gate hole.

In particular, the invention relates to an apparatus or a system for direct injection molding, wherein molten material, e.g. plastic material, is gated directly into a mold cavity via an injection gate having an injection gate hole.

Further, the invention relates to a method of injection molding.

### Background of the invention

Apparatus for injection molding, in particular direct injection molding, are known in various embodiments, which suffer from disadvantages such as regards complexity and lack of precision as regards the molding, in particular when a plurality of mold cavities is being supplied simultaneously from the same source of molten material, e.g. molten plastic material.

EP 0 960 672 A1 relates to an automatic molten metal supply and injection device, which comprises a body having a molten metal passage for guiding molten metal, a sleeve having a molten metal suction port and a discharge port. The sleeve is adapted to be rotated for opening and closing communication between the molten metal passage of the body and the suction port. A first piston is axially movably mounted in the sleeve for sucking molten metal into the sleeve by a predetermined amount through the suction port and extruding the thus sucked molten metal through the discharge port. A second piston, independent of the first piston, is axially movably mounted in the first piston to extend therethrough for opening and closing the discharge port and pressurizing the molten metal through the discharge port.

Further, US 3 319 297 A relates to a ram injection molding apparatus having a tubular casing with a nozzle at a forward portion, where the nozzle has a passageway communicating with a mold. Unplasticated material, e.g. thermoplastic resin, can be introduced into the tubular casing via a feed hopper. In the forward portion of the casing a spreader or torpedo is arranged for reciprocable and rotational movement to condition the plastic material. A tubular ram is received by the bore of the tubular casing and when the ram is moved forwardly, after the nozzle has been opened, fluxed plastic material is moved forward through the passageway of the nozzle into the mold.

Thus, there is a need for improvements as regards the ability of being able to produce homogenous moldings and furthermore there is a need for providing more efficient molding apparatus.

These and other objects are achievable by the invention as explained in further detail in the following.

### Summary of the invention

The invention relates to an apparatus for injection molding, said apparatus comprising
- a mold cavity member having a mold cavity,
- a melt channel,
- an injection chamber and
- an injection gate having an injection gate hole,
wherein said apparatus further comprises a movable injection sleeve, wherein
- said melt channel is configured for providing a flow of molten material from a source of molten material to the injection chamber,
- said apparatus is configured for transferring the molten material from the injection chamber to the mold cavity via said injection gate hole, said injection gate being controllable by a forward part of a movable filling valve, and wherein
- said injection chamber has a volume that is controllable by movement of the movable injection sleeve,
wherein said apparatus further comprises
- a purge channel for transferring said molten material from said melt channel to said injection chamber, said purge channel being controllable by said movable filling valve, and
- at least one injection channel that is controllable by said movable filling valve, and
- wherein said movable filling valve configured for controlling said purge channel and said at least one injection channel is reciprocatable between a first position with said at least one injection channel closed and said purge channel open for flow of molten material to said injection chamber and a second position with said at least one injection channel open and said purge channel closed for flow of molten material to said injection chamber.

Hereby, it is achieved that the apparatus for injection molding can be configured in a compact manner while providing the direct injection such that the molding can be performed in an efficient manner. Furthermore, it is possible by the invention to improve the quality of the molded components while performing the molding in a cost efficient manner.

By the invention the balancing between molding cavities will be balanced and compression of the plastic material is minimized due to the injection chamber being close to the molding cavity.

Less compression of the plastic material will ensure a more homogeneous filling and indicial cavity pressure as the injection chamber is 1:1 in direct connection to the molding cavity.

Furthermore, a more accurate filling as achieved by the invention will ensure a higher stability of dimensions between each molding cavity, e.g. resulting in higher quality of molded products.

By the invention, the injection process is moved from the injection molding machine to the mold, customized to part requirements which leads to a more precise filling. The impact of the invention is as well that the performance requirement of the injection molding machine will be lower.

Furthermore, it is achieved that since the temperature profile can be colder from the injection machine until the injection chamber as compared to traditional injection molding, it means that the resent time in the system can be prolonged without damage to the plastic material.

According to an embodiment, the apparatus may be configured for transferring the molten material from the injection chamber to the mold cavity by controllably reducing the volume of the injection chamber.

Hereby, the injection can be performed in a straightforward and efficient manner.

According to an embodiment, the injection chamber may be defined at least partly by said movable injection sleeve.

Hereby, a particular efficient and compact embodiment can be achieved.

According to an embodiment, said apparatus may be configured for controlling the volume of the injection chamber by axially moving said movable injection sleeve.

Hereby, a particular efficient and compact embodiment can be achieved.

According to an embodiment, the injection chamber and/or the melt channel may be heated.

According to an embodiment, the apparatus may comprise an injection chamber body, which at least partly defines said injection chamber.

Hereby, it is achieved that the injection chamber can be defined in a straightforward manner, whereby a compact apparatus is facilitated.

According to the invention, the apparatus comprises a purge channel for transferring said molten material from said melt channel to said injection chamber, said purge channel being controllable by said movable filling valve, whereby the operating of the injection molding apparatus can be performed in a relatively simple and efficient manner.

According to the invention, the apparatus further comprises at least one injection channel that is controllable by said movable filling valve, which serves to facilitate an efficient molding process.

According to the invention, said movable filling valve is configured for controlling said purge channel and said at least one injection channel is reciprocatable between a first position with said at least one injection channel closed and said purge channel open for flow of molten material to said injection chamber and a second position with said at least one injection channel open and said purge channel closed for flow of molten material to said injection chamber.

Hereby, it is achieved that the operating of the injection molding apparatus can be performed in a relatively simple and efficient manner.

According to an embodiment, said apparatus may be configured for transferring the molten material from the injection chamber via said at least one injection channel to the mold cavity with said movable filling valve positioned in said second position.

According to an embodiment, the movable filling valve may comprise at least part of said melt channel, e.g. in the form of an inner channel, which is heated.

Hereby, a compact and efficient manner of configuring the melt channel is achieved. According to an embodiment, the movable filling valve may further be configured with an inlet for receiving said molten material supplied from said source of molten material via a heated manifold having a manifold supply channel.

According to an embodiment, the flow of molten material in said melt channel from said heated manifold to said inlet of the movable filling valve may be controllable by movement of the movable filling valve.

Hereby, a relatively straightforward way of closing the melt channel is achieved.

According to a further aspect, the invention relates to a method of injection molding, the method using an apparatus according to one or more of claims 1-10 comprising
- a mold cavity member having a mold cavity,
- a melt channel,
- an injection chamber,
- an injection gate having an injection gate hole controllable by a movable filling valve,
- a movable injection sleeve and
- at least one injection channel,
   said method comprising the steps of
   - providing a flow of molten material from a source of molten material to the injection chamber via the melt channel, the purged melt moving the movable injection sleeve to create a desired injection volume in the injection chamber while the at least one injection channel is closed by said movable filling valve,
   - closing the flow of molten material from the source of molten material when an amount of molten material received in the injection chamber corresponds to the mold cavity,
   - opening the injection gate hole,
   - transferring the amount of molten material in the injection chamber through the at least one injection channel to the mold cavity via movement of said movable injection sleeve,
   - closing the movable filling valve and
   - resuming the flow of molten material from the source of molten material to the injection chamber via the melt channel.

Hereby, a method is achieved whereby the apparatus for injection molding can be configured in a compact manner while providing the direct injection such that the molding can be performed in an efficient manner. Furthermore, it is possible by the method according to the invention to improve the quality of the molded components while performing the molding in a cost efficient manner.

By the invention the balancing between molding cavities will be balanced and compression of the plastic material is minimized due to the injection chamber being close to the molding cavity.

Less compression of the plastic material will ensure a more homogeneous filling and indicial cavity pressure as the injection chamber is 1:1 in direct connection to the molding cavity.

Furthermore, a more accurate filling as achieved by the method according to the invention will ensure a higher stability of dimensions between each molding cavity, e.g. resulting in higher quality of molded products.

By the invention, the injection process is moved from the injection molding machine to the mold, customized to part requirements which leads to a more precise filling. The impact of the invention is as well that the performance requirement of the injection molding machine will be lower.

Furthermore, it is achieved that since the temperature profile can be colder from the injection machine until the injection chamber as compared to traditional injection molding, it means that the resent time in the system can be prolonged without damage to the plastic material.

### The figures

The invention will be explained in further detail below with reference to the figures of which
- Fig. 1: is an example of an injection molding apparatus according to an embodiment of the invention, seen in a perspective view,
- Fig. 2: shows a sectional view in a center plane of the injection molding apparatus as shown in fig. 1,
- Fig. 3: is an enhanced part of the sectional view of fig. 2, indicating moving parts,
- Figs. 4a-b: show the injection molding apparatus as shown in fig 2 in a first molding step with fig. 4b showing the front part enlarged,
- Figs. 5a-b: correspond to figs. 4a and 4b, but in a second molding step during purging,
- Figs. 6a-b: correspond to figs. 5a and 5b, but in a third molding step, when initiating the injection,
- Figs. 7a-b: correspond to figs. 6a and 6b, but in a fourth molding step during injection, and
- Figs. 8a-b: correspond to figs. 7a and 7b, but in a fifth step, where the injection molding apparatus ends the injection molding cycle.

### Detailed description

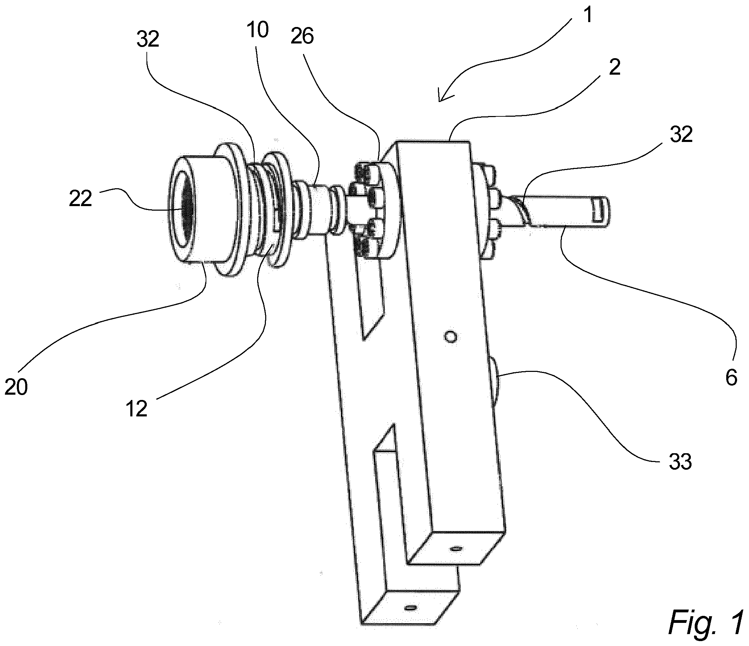

An example of an injection molding apparatus 1 according to an embodiment of the invention is shown in fig. 1 in a perspective view. The injection molding apparatus 1 comprises a manifold 2, to which is fixed molding components including a movable filling valve 6, which passes the manifold 2 via guiding parts 26 for the movable filling valve 6. The movable filling valve 6 is in operative connection with an injection chamber body 12, a movable injection sleeve 10 and a mold cavity member 20 having a mold cavity 20. As indicated in fig. 1, the movable filling valve 6 as well as the injection chamber body 12 may comprise grooves 32, which may be configured for receiving heating wires, i.e. for heating the respective components to facilitate the flow of molten material. In this respect it is noted that other parts, such as e.g. the manifold 2 may be heated as well, which will be apparent to a skilled person. Furthermore, in fig. 1 an inlet 33 to the manifold 2 is shown, e.g. an inlet for molten plastic material.

It is noted that a mold core (not shown in the figures) or the like may be configured to be positioned within the mold cavity member 20, e.g. in order to define a cavity space in the shape of the component that it is desired to mold, as it will be apparent to a skilled person.

Furthermore, in fig. 1 only one injection arrangement comprising e.g. a movable filling valve 6, an injection chamber body 12, a movable injection sleeve 10 and a mold cavity member 20 having a mold cavity 20 is shown in connection with the manifold 2. However, a plurality of such arrangements may be arranged in connection with the manifold 2, e.g. placed next to each other and arranged such that molten material is supplied to each of these arrangements from for example the same source.

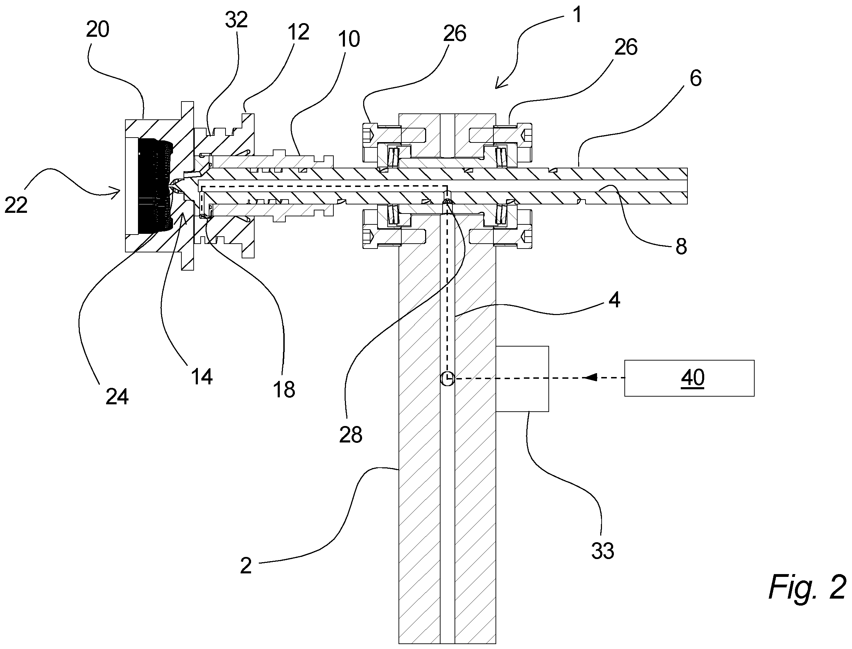

Fig. 2 shows a sectional view in a center plane of an example of an injection molding apparatus 1 essentially as shown and described in connection with fig. 1. The same parts as shown in fig. 1 will be designated with the same reference numbers in the following.

Thus, it is shown in fig. 2 that the manifold 2 comprises a manifold supply channel 4, which is connected to the inlet 33, to which molten material is supplied, e.g. pressed, from a source of molten material 40 as schematically shown in fig. 2. The movable filling valve 6, which passes the manifold 2 via the guiding parts 26, is designed with an inner channel 8, which leads to the front end of the movable valve rod 6. Here, the inner channel 8 is connected via a purge channel 18, which is made in the injection chamber body 12, to an injection chamber (not indicated in fig. 2), which will be described in detail in connection with the following figures.

Further, it is shown in fig. 2 that the movable filling valve 6 passes through the movable injection sleeve 10, which movable injection sleeve is at least partly received in the injection chamber body 12. Furthermore, the movable filling valve 6 is at its front end configured to form valve means 14 to cooperate with parts of the mold cavity member 20, e.g. in vicinity of an injection gate hole 24 designed for leading molten material into the mold cavity 22 as it will be explained in the following.

In fig. 2 the flow route for molten material is indicated with broken lines, i.e. from the source 40 of molten material via the inlet 33 to the manifold supply channel 4. Via this, the molten material flows into the inner channel 8 via an inlet 28 in the movable filling valve 6. From here, the molten material flows to the front end of the movable filling valve 6 and via the purge channel 18 into the injection chamber (which will be described later on).

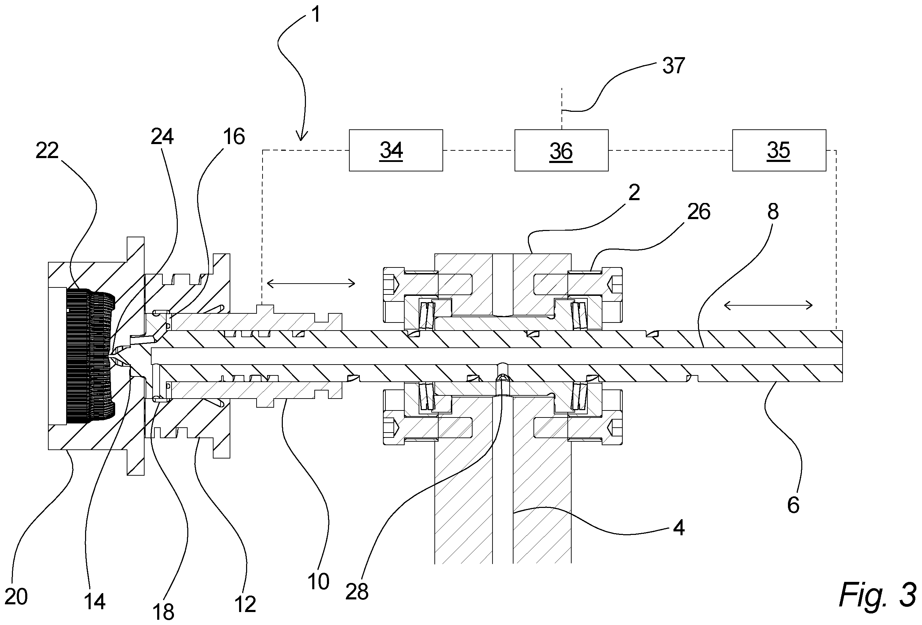

Fig. 3 shows an enhanced part of the sectional view of fig. 2, e.g. the upper part, where moving parts of the injection molding apparatus are indicated. Thus, it is indicated here that the movable injection sleeve 10 as well as the movable filling valve 6 are configured to be moved back and forth as shown with double-arrows. Further, it is shown that the purge channel 18 leads to the injection chamber 16, which is an e.g. circumferential chamber defined at least partly by the movable filling valve 6 and the injection chamber body 12 as it will appear with greater clarity from other figures. It will be understood, though, that as the movable injection sleeve 10 is moved to the right in fig. 3, the volume of the injection chamber body 12 will increase and vice versa.

As it further appears from fig. 3, the movement of the movable filling valve 6 will e.g. operate the valve means 14 and close/open the connection from the manifold supply channel 4 via the inlet 28 to the inner channel 8 of the movable filling valve 6.

The movement of the movable injection sleeve 10 and the movable filling valve 6 may as shown be effected by means of drive means 34 and 35, respectively, that may be controlled by a shared control device 36, e.g. on the basis of input variables 37.

The drive means 34 and 35 may for example be mechanically, electrically and/or hydraulically driven servo units or the like.

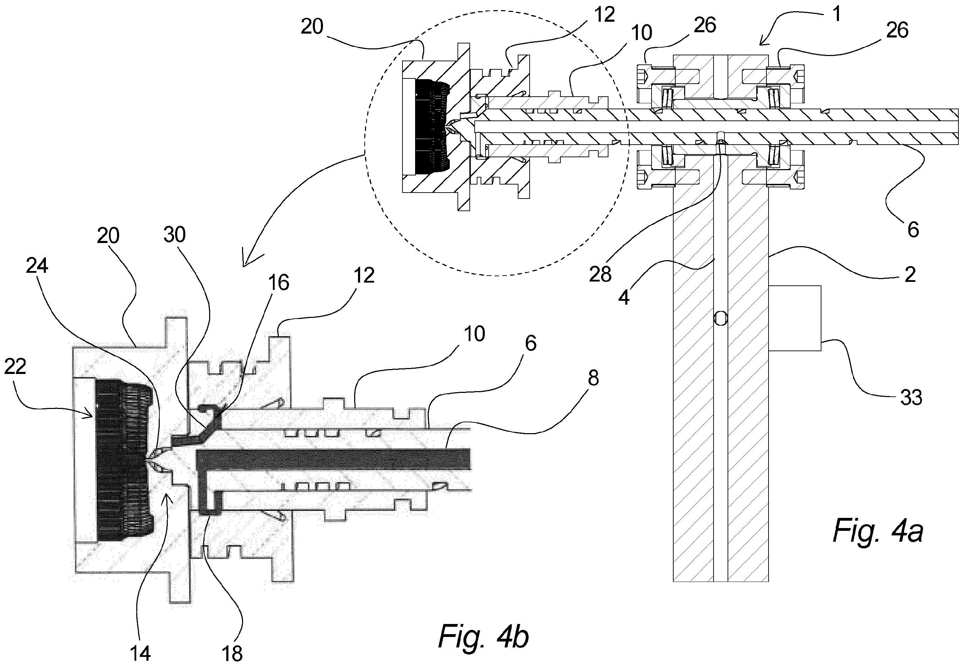

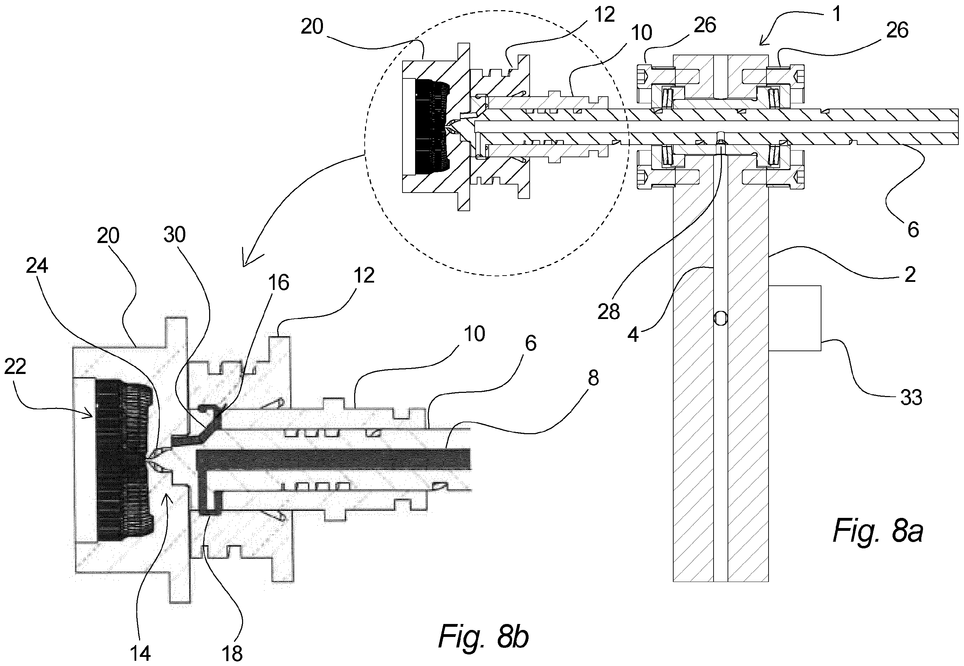

In the following an example of the functioning of an injection molding apparatus 1 according to an embodiment of the invention will be explained with reference to figs. 4a/4b to 8a/8b, where each of these figures shows the injection molding apparatus in a molding step and further shows the front part enlarged. Thus, these figures represent five consecutive steps in an injection molding cycle.

In fig. 4a the injection molding apparatus 1 is shown in a first molding step, where, as mentioned above, furthermore the front part of the injection molding apparatus 1 is shown in an enlarged form in fig. 4b.

Here, the movable injection sleeve 10 and the movable filling valve 6 are both positioned to the left in the figures. The molten material thus flows in the melt channel via the inlet 33, the manifold supply channel 4 and the inlet 28 into the inner channel 8 in the movable filling valve 6, which, as it will be understood, is closed at the rear end, i.e. to the right in fig. 4a. The molten material thus flows towards the front part of the movable filling valve 6, where it via e.g. a transverse channel in the movable filling valve 6 and the purge channel 18 in the inner wall of the movable injection sleeve 10 enters the injection chamber 16, which in figs. 4a and 4b has a minimal volume only. Since the movable filling valve 6 is positioned at its forward position, i.e. to the left in fig. 4b, the valve means 14 will close between the injection chamber 16 and the injection gate hole 24 that leads into the mold cavity 22.

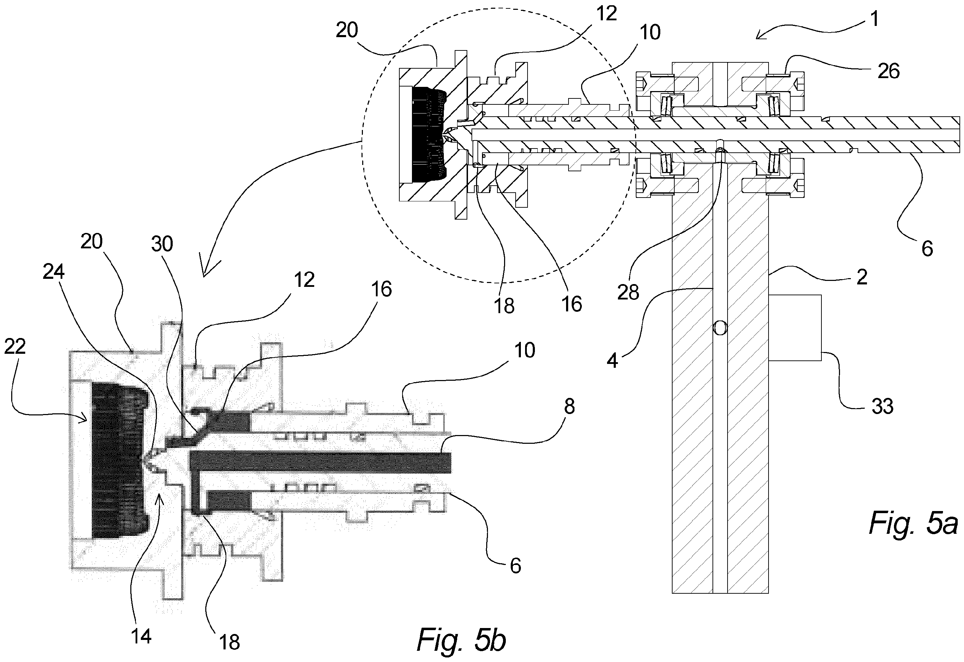

In figs. 5a and 5b, showing a second step during purging, the movable filling valve 6 is still positioned at its forward position, but the movable injection sleeve 10 is gradually being moved to the right in the figures, corresponding to the amount of molten material that enters the injection chamber 16 via the purge channel 18. The movable injection sleeve 10 may as shown on fig. 3 be driven by drive means 34. The size/volume of the injection chamber 16 is adjusted to correspond to fit the size of the mold cavity, i.e. the volume of the component that it is desired to mold. When the movable injection sleeve 10 has been moved to such an extent that the size/volume of the injection chamber 16 corresponds the size of the mold cavity 22, the molding system, e.g. the control device 36, may control the system to enter the next step.

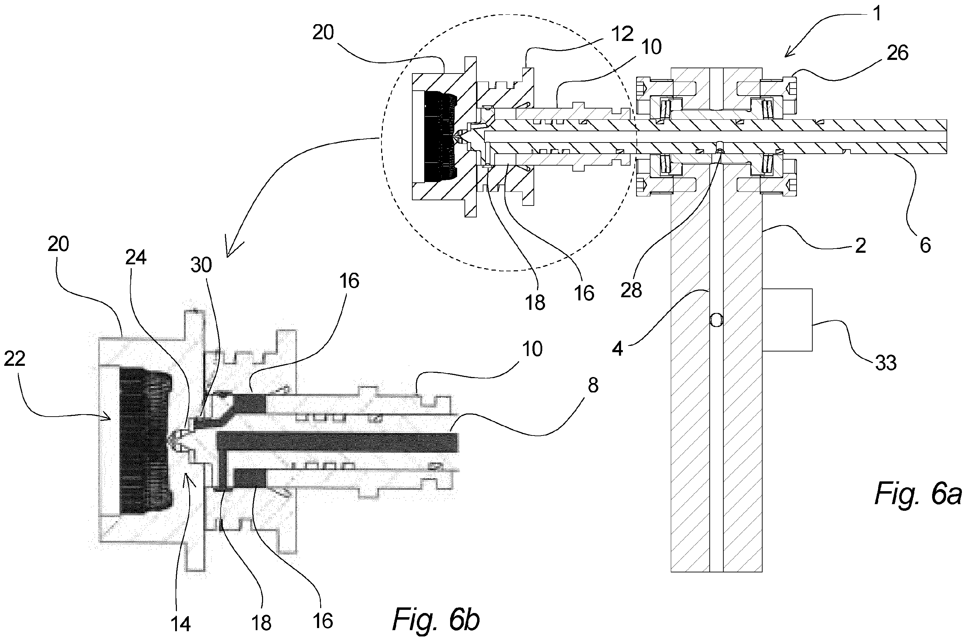

This is shown in figs. 6a and 6b, where the injection of the molten material into the mold cavity 22 is initiated. The movable filling valve 6 is moved backwards, i.e. to the right in figs. 6a and 6b, controlled by e.g. the drive means 35 and the control device 36. Thus, the valve means 14 will open between the injection chamber 16 and the injection gate hole 24 that leads into the mold cavity 22, e.g. by opening an injection channel 30 that previous to this step has been closed towards e.g. a part of the mold cavity member. Further, by the movement of the movable filling valve 6, the purge channel is being closed as it can be seen in fig. 6b, meaning that the connection between the injection chamber 16 and the melt channel is now closed.

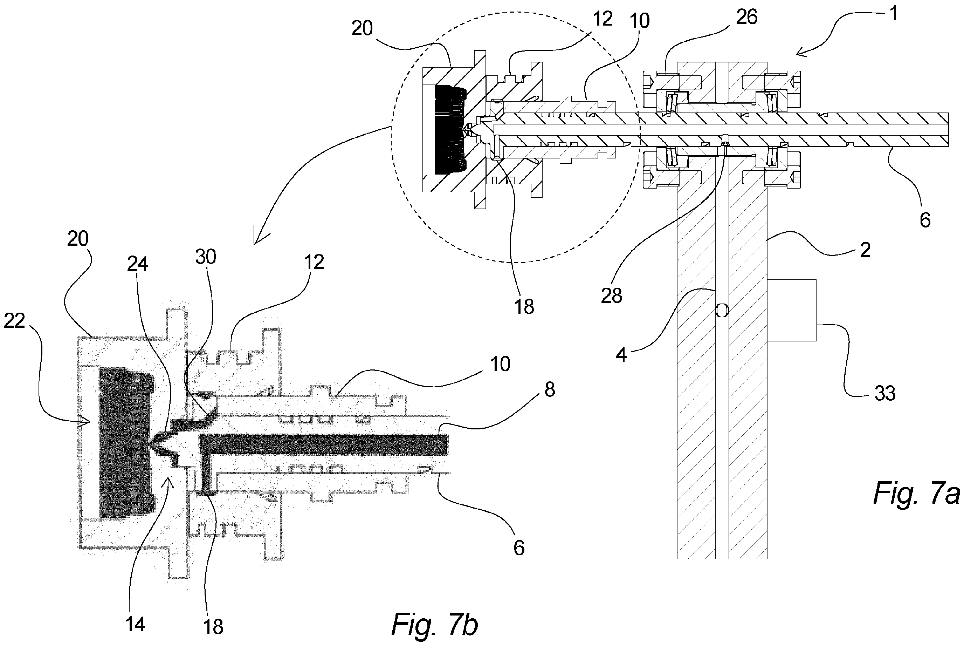

Thus, the injection molding apparatus is ready to perform the injection of the molten material into the mold cavity 22 as it is shown in figs. 7a and 7b. Here, with the valve means 14 open between the injection chamber 16 and the injection gate hole 24, the movable injection sleeve 10 is being moved forwards, i.e. to the left in fig. 7a and 7b, whereby the molten material from the injection chamber 16 is being pushed into the mold cavity 22 via the injection channel 30 and the injection gate hole 24. The movable injection sleeve 10 is moved by the drive means 34, controlled by the control device 36, until it reaches an end position, where the injection chamber 16 has been emptied or essentially emptied.

Hereafter, the last step in the cycle is being performed, as it will be exemplified with reference to fig. 8a and 8b. The movable filling valve 6 is being moved forward again, i.e. to the left in fig. 8a and 8b, whereby the valve means 14 will close between the injection chamber 16 and the injection gate hole 24. Further, the purge channel 18 will again be open between the inner channel 8 and the injection chamber 16 and the movement of the movable filling valve 6 also means that the molten material can flow from the manifold supply channel 4 via the inlet 28 to the inner channel 8, whereby the molten material can start entering the injection chamber 16, corresponding to a gradual movement of the movable injection sleeve 10.

It is noted that figs. 8a and 8b correspond to figs. 4a and 4b and that a complete injection molding cycle has been performed, including rejection of the molded component from mold cavity 20 and with initiation of molding of the next component.

Further, it is noted that as indicates above the movable injection sleeve 10 is adjustable as regards the position where it stops its movement rearwards, i.e. away from the mold cavity member 20, such that the size/volume of the injection chamber 16 corresponds the size of the mold cavity 22. Thus, it will be understood that this stop position can be adjusted, when e.g. a new or larger type of component is to be molded. This can be effected via the control device 36, for example via control parameters supplied to the control device 36 as input variables 37.

As regards the injection channel 30 it is noted that this may be designed as one or more channels that are made in the forward part of the movable filling valve 6, e.g. as one or more axial channels that when the movable filling valve 6 is in its forward position is/are closed towards for example a part of the mold cavity member 20, e.g. near the entry to the injection gate hole 24.

The movable injection sleeve 10 may as shown in the figures be a body that is configured to essentially surround the movable filling valve 6, while being adapted to move at least partly within the injection chamber body 12. However, it will be understood that it may be designed in various embodiments, shapes and variations. It is apparent that its inner shape may correspond to the outer shape of the movable filling valve 6, e.g. in the form of a circular cylindrical body or any other cylindrical shape. Also, grooves or the like may be present in the inner and/or outer surface of the movable injection sleeve 10, e.g. guiding grooves or the like. Similarly, ridges or the like may be present instead or as well. Also, it will be understood that the movable injection sleeve may be a body that does not entirely surround the movable filling valve 6 but may be e.g. axially cut to define a slot or the like, which may even extend the whole length of the movable injection sleeve. Other forms and variations are possible, which will be apparent to a skilled person.

### List of reference numbers

- 1: Apparatus for injection molding
- 2: Manifold
- 4: Manifold supply channel
- 6: Movable filling valve
- 8: Inner channel in movable filling valve
- 10: Movable injection sleeve
- 12: Injection chamber body
- 14: Valve means
- 16: Injection chamber
- 18: Purge channel
- 20: Mold cavity member
- 22: Mold cavity
- 24: Injection gate hole
- 26: Guiding part for movable valve rod
- 28: Inlet to movable filling valve, e.g. to inner channel
- 30: Injection channel
- 32: Groove, e.g. for heating component
- 33: Inlet to manifold
- 34: Drive means for movable injection sleeve
- 35: Drive means for movable filling valve
- 36: Control device for drive means
- 37: Input variables to control device
- 40: Source of molten material

## Claims

1. An apparatus (1) for injection molding, said apparatus comprising
- a mold cavity member (20) having a mold cavity (22),
- a melt channel,
- an injection chamber (16) and
- an injection gate having an injection gate hole (24),
wherein said apparatus further comprises a movable injection sleeve (10), wherein
- said melt channel is configured for providing a flow of molten material from a source of molten material to the injection chamber (16),
- said apparatus (1) is configured for transferring the molten material from the injection chamber (16) to the mold cavity (22) via said injection gate hole (24), said injection gate being controllable by a forward part of a movable filling valve (6), and wherein
- said injection chamber (16) has a volume that is controllable by movement of the movable injection sleeve (10),
**characterised in that** said apparatus further comprises
- a purge channel (18) for transferring said molten material from said melt channel to said injection chamber (16), said purge channel (18) being controllable by said movable filling valve (6), and
- at least one injection channel (30) that is controllable by said movable filling valve (6), and wherein
- said movable filling valve (6) configured for controlling said purge channel (18) and said at least one injection channel (30) is reciprocatable between a first position with said at least one injection channel (30) closed and said purge channel (18) open for flow of molten material to said injection chamber (16) and a second position with said at least one injection channel (30) open and said purge channel (18) closed for flow of molten material to said injection chamber (16).

2. Apparatus according to claim 1, wherein the apparatus (1) is configured for transferring the molten material from the injection chamber (16) to the mold cavity (22) by controllably reducing the volume of the injection chamber (16).

3. Apparatus according to claim 1 or 2, wherein said injection chamber (16) is defined at least partly by said movable injection sleeve (10).

4. Apparatus according to claim 3, wherein said apparatus is configured for controlling the volume of the injection chamber (16) by axially moving said movable injection sleeve (10).

5. Apparatus according to any one of claims 1-4, wherein said injection chamber (16) and/or said melt channel is heated.

6. Apparatus according to any one of claims 1-5, wherein said apparatus comprises an injection chamber body (12), which at least partly defines said injection chamber (16).

7. Apparatus according to any one of claims 1-6, wherein the apparatus is configured for transferring the molten material from the injection chamber (16) via said at least one injection channel (30) to the mold cavity (22) with said movable filling valve (6) positioned in said second position.

8. Apparatus according to any one of claims 1-7, wherein said movable filling valve (6) comprises at least part of said melt channel, e.g. in the form of an inner channel (8), which is heated.

9. Apparatus according to any one of claims 1-8, wherein said movable filling valve (6) is further configured with an inlet (28) for receiving said molten material supplied from said source of molten material via a heated manifold (2) having a manifold supply channel (4).

10. Apparatus according to claim 9, wherein the flow of molten material in said melt channel from said heated manifold (2) to said inlet (28) of the movable filling valve (6) is controllable by movement of the movable filling valve (6).

11. Method of injection molding, the method using an apparatus (1) according to one or more of claims 1-10 comprising
- a mold cavity member (20) having a mold cavity (22),
- a melt channel,
- an injection chamber (16),
- an injection gate having an injection gate hole (24) controllable by a movable filling valve (6),
- a movable injection sleeve (10) and
- at least one injection channel (30),
said method comprising the steps of
- providing a flow of molten material from a source of molten material to the injection chamber (16) via the melt channel, the purged melt moving the movable injection sleeve (10) to create a desired injection volume in the injection chamber (16) while the at least one injection channel (30) is closed by said movable filling valve (6),
- closing the flow of molten material from the source of molten material when an amount of molten material received in the injection chamber (16) corresponds to the mold cavity (22),
- opening the injection gate hole (24),
- transferring the amount of molten material in the injection chamber (16) through the at least one injection channel (30) to the mold cavity (22) via movement of said movable injection sleeve (10),
- closing the movable filling valve (6) and
- resuming the flow of molten material from the source of molten material to the injection chamber (16) via the melt channel.

## Patentansprüche

1. Vorrichtung (1) zum Spritzgießen, wobei die Vorrichtung Folgendes umfasst:
- ein Formhöhlungselement (20), das eine Formhöhlung (22) hat,
- einen Schmelzkanal,
- eine Einspritzkammer (16) und
- eine Einspritzpforte, die eine Einspritzpfortenöffnung (24) hat,
wobei die Vorrichtung außerdem eine bewegliche Einspritzmanschette (10) umfasst und wobei:
- der Schmelzkanal dafür eingerichtet ist, einen Fluss von geschmolzenem Material von einer Quelle für geschmolzenes Material zur Einspritzkammer (16) bereitzustellen,
- die Vorrichtung (1) dafür eingerichtet ist, das geschmolzene Material von der Einspritzkammer (16) über die Einspritzpfortenöffnung (24) zur Formhöhlung (22) zu transportieren, wobei die Einspritzpforte durch einen Vorderteil eines beweglichen Füllventils (6) steuerbar ist, und wobei
- die Einspritzkammer (16) ein Volumen hat, das durch die Bewegung der beweglichen Einspritzmanschette (10) steuerbar ist,
**dadurch gekennzeichnet, dass** die Vorrichtung außerdem Folgendes umfasst:
- einen Abführungskanal (18), um das geschmolzene Material vom Schmelzkanal zur Einspritzkammer (16) zu transportieren, wobei der Abführungskanal (18) durch das bewegliche Füllventil (6) steuerbar ist, und
- wenigstens einen Einspritzkanal (30), der durch das bewegliche Füllventil (6) steuerbar ist, und wobei
- das bewegliche Füllventil (6), das dafür eingerichtet ist, den Abführungskanal (18) und den wenigstens einen Einspritzkanal (30) zu steuern, umschaltbar ist zwischen einer ersten Position, bei der der wenigstens eine Einspritzkanal (30) geschlossen und der Abführungskanal (18) offen ist, für einen Fluss von geschmolzenem Material zur Einspritzkammer (16), und einer zweiten Position, bei der der wenigstens eine Einspritzkanal (30) offen und der Abführungskanal (18) geschlossen ist, für einen Fluss von geschmolzenem Material zur Einspritzkammer (16).

2. Vorrichtung nach Anspruch 1, wobei die Vorrichtung (1) dafür eingerichtet ist, das geschmolzene Material von der Einspritzkammer (16) zur Formhöhlung (22) zu transportieren, indem das Volumen der Einspritzkammer (16) steuerbar verringert wird.

3. Vorrichtung nach Anspruch 1 oder 2, wobei die Einspritzkammer (16) wenigstens teilweise durch die bewegliche Einspritzmanschette (10) definiert ist.

4. Vorrichtung nach Anspruch 3, wobei die Vorrichtung dafür eingerichtet ist, das Volumen der Einspritzkammer (16) zu steuern, indem die bewegliche Einspritzmanschette (10) axial bewegt wird.

5. Vorrichtung nach einem der Ansprüche 1 bis 4, wobei die Einspritzkammer (16) und/oder der Schmelzkanal beheizt ist.

6. Vorrichtung nach einem der Ansprüche 1 bis 5, wobei die Vorrichtung ein Einspritzkammergehäuse (12) umfasst, das wenigstens teilweise die Einspritzkammer (16) definiert.

7. Vorrichtung nach einem der Ansprüche 1 bis 6, wobei die Vorrichtung dafür eingerichtet ist, das geschmolzene Material von der Einspritzkammer (16) über den wenigstens einen Einspritzkanal (30) zur Formhöhlung (22) zu transportieren, wobei das bewegliche Füllventil (6) in der zweiten Position positioniert ist.

8. Vorrichtung nach einem der Ansprüche 1 bis 7, wobei das bewegliche Füllventil (6) wenigstens einen Teil des Schmelzkanals umfasst, beispielsweise in Form eines inneren Kanals (8), der beheizt ist.

9. Vorrichtung nach einem der Ansprüche 1 bis 8, wobei das bewegliche Füllventil (6) außerdem mit einem Einlass (28) eingerichtet ist, um über ein beheiztes Versorgungselement (2), das einen Versorgungselement-Zuführungskanal (4) hat, das von der Quelle für geschmolzenes Material bereitgestellte Material zu empfangen.

10. Vorrichtung nach Anspruch 9, wobei der Fluss von geschmolzenem Material im Schmelzkanal vom beheizten Versorgungselement (2) zum Einlass (28) des beweglichen Füllventils (6) durch Bewegungen des beweglichen Füllventils (6) steuerbar ist.

11. Verfahren zum Spritzgießen, wobei das Verfahren eine Vorrichtung (1) nach einem oder mehreren der Ansprüche 1 bis 10 verwendet, die Folgendes umfasst:
- ein Formhöhlungselement (20), das eine Formhöhlung (22) hat,
- einen Schmelzkanal,
- eine Einspritzkammer (16)
- eine Einspritzpforte, die eine Einspritzpfortenöffnung (24) hat und die durch ein bewegliches Füllventil (6) steuerbar ist,
- eine bewegliche Einspritzmanschette (10), und
- wenigstens einen Einspritzkanal (30),
wobei das Verfahren die folgenden Schritte umfasst:
- Bereitstellen eines Flusses von geschmolzenem Material von einer Quelle für geschmolzenes Material zur Einspritzkammer (16) über den Schmelzkanal, wobei die abgeführte Schmelze die bewegliche Einspritzmanschette (10) bewegt, um in der Einspritzkammer (16) ein gewünschtes Einspritzvolumen zu erzeugen, wobei der wenigstens eine Einspritzkanal (30) durch das bewegliche Füllventil (6) geschlossen ist,
- Beenden des Flusses von geschmolzenem Material von der Quelle für geschmolzenes Material, wenn eine Menge von geschmolzenem Material, die in der Einspritzkammer (16) empfangen wurde, der Formhöhlung (22) entspricht,
- Öffnen der Einspritzpfortenöffnung (24),
- Transportieren der Menge an geschmolzenem Material in die Einspritzkammer (16) durch den wenigstens einen Einspritzkanal (30) zur Formhöhlung (22) über eine Bewegung der beweglichen Einspritzmanschette (10),
- Schließen des beweglichen Füllventils (6), und
- Wiederaufnehmen des Flusses von geschmolzenem Material von der Quelle für geschmolzenes Material zur Einspritzkammer (16) über den Schmelzkanal.

## Revendications

1. Appareil (1) pour moulage par injection, ledit appareil comprenant
- un élément de cavité de moule (20) ayant une cavité de moule (22),
- un canal de fusion,
- une chambre d'injection (16) et
- une grille d'injection ayant un orifice de grille d'injection (24),
dans lequel ledit appareil comprend en outre un manchon d'injection mobile (10), dans lequel
- ledit canal de fusion est configuré pour fournir un écoulement de matériau fondu d'une source de matériau fondu à la chambre d'injection (16),
- ledit appareil (1) est configuré pour transférer le matériau fondu de la chambre d'injection (16) à la cavité de moule (22) via ledit orifice de grille d'injection (24), ladite grille d'injection pouvant être commandée par une partie avant d'une soupape de remplissage mobile (6), et dans lequel
- ladite chambre d'injection (16) a un volume qui peut être commandé par un déplacement du manchon d'injection mobile (10),
**caractérisé en ce que** ledit appareil comprend en outre
- un canal de purge (18) pour transférer ledit matériau fondu dudit canal de fusion à ladite chambre d'injection (16), ledit canal de purge (18) pouvant être commandé par ladite soupape de remplissage mobile (6), et
- au moins un canal d'injection (30) qui peut être commandé par ladite soupape de remplissage mobile (6), et dans lequel
- ladite soupape de remplissage mobile (6) configurée pour commander ledit canal de purge (18) et ledit au moins un canal d'injection (30) peut effectuer un mouvement de va-et-vient entre une première position avec ledit au moins un canal d'injection (30) fermé et ledit canal de purge (18) ouvert pour un écoulement de matériau fondu vers ladite chambre d'injection (16) et une seconde position avec ledit au moins un canal d'injection (30) ouvert et ledit canal de purge (18) fermé pour un écoulement de matériau fondu vers ladite chambre d'injection (16).

2. Appareil selon la revendication 1, dans lequel l'appareil (1) est configuré pour transférer le matériau fondu de la chambre d'injection (16) à la cavité de moule (22) en réduisant de manière commandable le volume de la chambre d'injection (16).

3. Appareil selon la revendication 1 ou 2, dans lequel ladite chambre d'injection (16) est définie au moins partiellement par ledit manchon d'injection mobile (10).

4. Appareil selon la revendication 3, dans lequel ledit appareil est configuré pour commander le volume de la chambre d'injection (16) en déplaçant axialement ledit manchon d'injection mobile (10).

5. Appareil selon l'une quelconque des revendications 1 à 4, dans lequel ladite chambre d'injection (16) et/ou ledit canal de fusion sont chauffés.

6. Appareil selon l'une quelconque des revendications 1 à 5, dans lequel ledit appareil comprend un corps de chambre d'injection (12), qui définit au moins partiellement ladite chambre d'injection (16).

7. Appareil selon l'une quelconque des revendications 1 à 6, dans lequel l'appareil est configuré pour transférer le matériau fondu de la chambre d'injection (16) via ledit au moins un canal d'injection (30) à la cavité de moule (22) avec ladite soupape de remplissage mobile (6) positionnée dans ladite seconde position.

8. Appareil selon l'une quelconque des revendications 1 à 7, dans lequel ladite soupape de remplissage mobile (6) comprend au moins une partie dudit canal de fusion, par exemple sous la forme d'un canal interne (8), qui est chauffée.

9. Appareil selon l'une quelconque des revendications 1 à 8, dans lequel ladite soupape de remplissage mobile (6) est configurée en outre avec une entrée (28) pour recevoir ledit matériau fondu fourni depuis ladite source de matériau fondu via un distributeur chauffé (2) ayant un canal d'alimentation de distributeur (4).

10. Appareil selon la revendication 9, dans lequel l'écoulement de matériau fondu dans ledit canal de fusion dudit distributeur chauffé (2) à ladite entrée (28) de la soupape de remplissage mobile (6) peut être commandé par déplacement de la soupape de remplissage mobile (6).

11. Procédé de moulage par injection, le procédé utilisant un appareil (1) selon une ou plusieurs des revendications 1 à 10 comprenant
- un élément de cavité de moule (20) ayant une cavité de moule (22),
- un canal de fusion,
- une chambre d'injection (16),
- une grille d'injection ayant un orifice de grille d'injection (24) pouvant être commandée par une soupape de remplissage mobile (6),
- un manchon d'injection mobile (10) et
- au moins un canal d'injection (30),
ledit procédé comprenant les étapes consistant à
- fournir un écoulement de matériau fondu d'une source de matériau fondu à la chambre d'injection (16) via le canal de fusion, la matière en fusion purgée déplaçant le manchon d'injection mobile (10) pour créer un volume d'injection souhaité dans la chambre d'injection (16) pendant que l'au moins un canal d'injection (30) est fermé par ladite soupape de remplissage mobile (6),
- fermer l'écoulement de matériau fondu depuis la source de matériau fondu lorsqu'une quantité de matériau fondu reçue dans la chambre d'injection (16) correspond à la cavité de moule (22),
- ouvrir l'orifice de grille d'injection (24),
- transférer la quantité de matériau fondu dans la chambre d'injection (16) à travers l'au moins un canal d'injection (30) à la cavité de moule (22) via un déplacement dudit manchon d'injection mobile (10),
- fermer la soupape de remplissage mobile (6) et
- reprendre l'écoulement de matériau fondu de la source de matériau fondu à la chambre d'injection (16) via le canal de fusion.
